# EUROPEAN PATENT SPECIFICATION

(11) **EP 3 549 991 B1**
(45) Date of publication and mention of the grant of the patent: **27.09.2023**
(21) Application number: 17875720.9
(22) Date of filing: 03.11.2017
(51) Int. Cl.: C09J 7/20, C09J 7/21, B32B 33/00

(54) **HEAT RESISTANT ADHESIVE TAPE AND MANUFACTURING METHOD THEREFOR**
HITZEBESTÄNDIGES KLEBEBAND UND HERSTELLUNGSVERFAHREN DAFÜR
RUBAN ADHÉSIF RÉSISTANT À LA CHALEUR ET SON PROCÉDÉ DE FABRICATION

(30) Priority: 30.11.2016 CN 201611081444
(43) Date of publication of application: 09.10.2019
(73) Proprietor: Nitto Denko (Shanghai Songjiang) Co., Ltd., Shanghai 201613 (CN); Nitto Denko Corporation, Ibaraki-shi, Osaka 567-8680 (JP)
(72) Inventor: LI, Xu, Shanghai 201613 (CN); WATANABE, Yoshinori, Osaka 567-8680 (JP); ZHAN, Bicai, Shanghai 201613 (CN)
(74) Representative: Müller-Boré & Partner Patentanwälte PartG mbB
(86) International application number: PCT/CN2017/109235
(87) International publication number: WO 2018/099239

(56) References cited:
- EP-A1- 3 549 750
- WO-A1-2015/122112
- CN-A- 104 302 722
- US-A1- 2015 072 580
- DATABASE WPI Week 199324 Thomson Scientific, London, GB; AN 1993-191741 XP002799483, -& JP H05 117608 A (NITTO DENKO CORP) 14 May 1993 (1993-05-14)
- DATABASE WPI Week 199005 19 December 1989 (1989-12-19) Thomson Scientific, London, GB; AN 1990-034817 -& JP H01 314165 A (NITTO DENKO CORP) 19 December 1989 (1989-12-19)

## Description

### TECHNICAL FIELD

The disclosure relates to a heat-resistant adhesive tape, and more particularly to an adhesive tape using a glass fiber fabric impregnated with a fluorine-containing resin as a substrate. The disclosure also relates to a method of manufacturing the aforesaid adhesive tape.

### RELATED ART

Such an adhesive tape is known, which uses a glass fiber fabric impregnated with a fluorine-containing resin as a substrate, and has an adhesive layer provided on one surface of the substrate. The adhesive tape exhibits high heat resistance derived from the glass fiber fabric and the fluorine-containing resin. For instance, US 2015/072580 A1 and CN 104 302 722 A disclose an adhesive tape comprising an adhesive tape substrate and an adhesive agent layer provided on one surface of the adhesive tape substrate, the adhesive tape substrate comprising a glass cloth and a fluorine resin impregnated in the glass cloth, wherein glass yarns constituting the glass cloth have a cross-section having an aspect ratio of 0.15 or more.

Glass fiber fabrics are resistant to high temperatures and have high strength. When an adhesive tape resistant to high temperature is manufactured, glass fiber fabrics are often used for manufacturing a substrate so as to increase the strength. Especially when an adhesive tape is used in the field of heat sealing, after being attached to a hot plate, the adhesive tape is abraded due to contact between the adhesive tape and the heat sealed article. Since the surface of the existing heat-resistant adhesive tape is uneven, the abrasion is uneven during use, and some of the glass fibers are easily exposed, so the service life is lowered.

Besides, in order to increase the service life of the existing products, the substrate fluororesin layer is thickened. In this case, when the adhesive tape is attached to a hot plate having an angle, the counter force is large after the bending, so that it is not easy to stick and is easily detached from the adherend, resulting in a decrease in the service life of the adhesive tape.

### SUMMARY

### Problem to be solved by the disclosure

The object of the disclosure is to provide a heat-resistant adhesive tape, which has good flatness, strong abrasion resistance, is easy to stick and not easy to be detached from the adherend, and has a high production efficiency, and to provide a method of manufacturing the same.

### Solution for solving the problem

The present application provides a heat-resistant adhesive tape as characterized in claim 1, which comprises a substrate layer, and an adhesive layer provided on a first surface of the substrate layer, the substrate layer further comprises a second surface opposite to the first surface, and the substrate layer is a glass fiber fabric treated with a silicon-containing agent, and the treated glass fiber fabric is impregnated with a fluorine-containing resin, wherein the second surface has a surface roughness of Rz ≤ 2.5 µm or Ra ≤ 1.0 µm, and wherein the amount of the silicon-containing agent is 0.05 to 0.2% by weight of the total weight of the glass fiber fabric.

In the heat-resistant adhesive tape according to the present application, the thinnest thickness between the second surface of the substrate layer and the glass fiber fabric in terms of the thickness from the outer surface of the substrate layer to the nearest glass fiber is 10 to 30 µm.

In the heat-resistant adhesive tape according to the present application, a ratio of the thinnest thickness between the second surface of the substrate layer and the glass fiber fabric to the thinnest thickness between the first surface of the substrate layer and the glass fiber fabric is preferably 0.8 to 1.3.

In the heat-resistant adhesive tape according to the present application, the fluorine-containing resin is preferably one or more of polytetrafluoroethylene (PTFE), perfluoro(alkoxy alkane) (PFA), perfluoroethylene-propylene copolymer (FEP), ethylene-tetrafluoroethylene copolymer (ETFE), and polyvinylidene fluoride (PVdF).

The present application further provides a method for manufacturing the heat-resistant adhesive tape according to the present application, comprising the following steps:
treating a glass fiber fabric with a silicon-containing agent;
impregnating the glass fiber fabric treated as above with a fluorine-containing resin;
heating the glass fiber fabric impregnated with the fluorine-containing resin to form the substrate layer;
forming the adhesive layer on the first surface of the substrate layer,
wherein the amount of the silicon-containing agent is 0.05 to 0.2% by weight of the total weight of the glass fiber fabric.

In the method for manufacturing the heat-resistant adhesive tape according to the present application, after the glass fiber fabric is impregnated with the fluorine-containing resin and before the glass fiber fabric is heated to form the substrate layer, the glass fiber fabric impregnated with the fluorine-containing resin is preferably processed with a scraper to control the thickness of the fluorine-containing resin on both sides of the glass fiber fabric.

In the method for manufacturing the heat-resistant adhesive tape according to the present application, after the substrate layer is formed and before the adhesive layer is formed, the first surface of the substrate is preferably subject to surface treatment.

In the method for manufacturing the heat-resistant adhesive tape according to the present application, the surface treatment is preferably performed by using a SiO₂/PFA mixture, the PFA is a perfluoro(alkoxy alkane).

In the method for manufacturing the heat-resistant adhesive tape according to the present application, the step of impregnating the glass fiber fabric with the fluorine-containing resin and the step of heating to form the substrate layer are preferably repeated for 2 to 4 times.

### Effects of the disclosure

By adjusting the surface roughness of the adhesive-free surface of the heat-resistant adhesive tape of the disclosure, the abrasion resistance of the adhesive tape can be improved, the production efficiency can be improved, and the cost can be reduced.

### BRIEF DESCRIPTION OF THE DRAWINGS

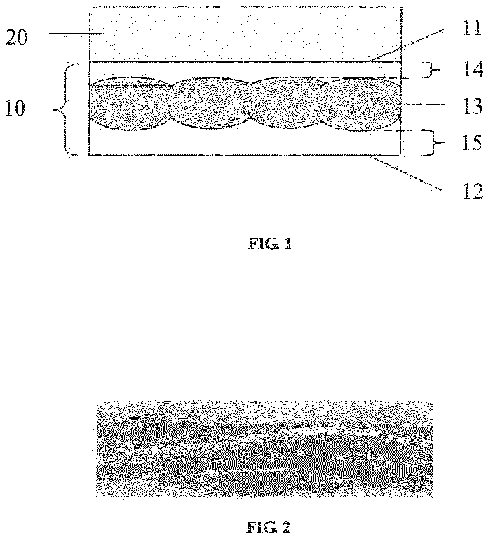

Fig. 1 is a schematic view illustrating a cross-sectional structure of an example of the heat-resistant adhesive tape of the disclosure;
Fig. 2 is an enlarged view illustrating a cross section of an example of a heat-resistant adhesive tape of the disclosure.

### Description of the reference numerals

10 a substrate layer
11 the first surface of the substrate layer
12 the second surface of the substrate layer
13 a glass fiber fabric
14 the thinnest thickness between the first surface of the substrate layer and the glass fiber fabric
15 the thinnest thickness between the second surface of the substrate layer and the glass fiber fabric
20 an adhesive layer

### DETAILED DESCRIPTION

The disclosure will now be described in detail with reference to the drawings.

### [Heat-resistant adhesive tape]

The heat resistant tape of the disclosure comprises a substrate layer 10 and an adhesive layer 20 disposed on the first surface 11 of the substrate layer 10, the substrate layer 10 further comprises a second surface 12 opposite to the first surface 11; the substrate layer 10 is a glass fiber fabric 13 impregnated with a fluorine-containing resin, and the surface roughness of the second surface 12 is Rz ≤ 2.5 µm or Ra ≤ 1.0 µm. More preferably, the surface roughness of the second surface 12 meets Rz ≤ 2.5 µm and Ra ≤ 1.0 µm at the same time.

### <Substrate layer>

In the disclosure, the glass fiber fabric 13 is treated with a silicon-containing agent, and the treated glass fiber fabric is impregnated with a fluorine-containing resin, and the glass fiber fabric impregnated with the fluorine-containing resin is heated to form the substrate layer 10. The thickness of the substrate layer 10 is, for example, 10 to 500 µm, preferably 40 to 300 µm.

### <Glass fiber fabric>

In the disclosure, the glass fiber fabric is a fabric obtained by weaving glass fiber yarns. The glass strand used as the glass fiber fabric is usually formed by pulling and aligning glass fibers having a diameter of about several microns in units of several hundred. The characteristics of the glass fiber fabric are determined by fiber properties, warp and weft density, yarn structure and texture. The warp and weft density is determined by the yarn structure and texture. The warp and weft density plus the yarn structure determines the physical properties of the fabric, such as weight, thickness and breaking strength. The basic texture is plain, twill, satin, rib and basket. The type and configuration of the glass fiber fabric are not particularly limited. For example, it is preferable to use a glass fiber plain fabric having a basis weight of 15 to 110 g/m², a yarn density of 10 to 100 / 25 mm in the warp direction and the weft direction, and a thickness of 10 µm to 500 µm, more preferably 30 µm to 250 µm. The glass fiber fabric may be split before use to improve the effect of the subsequent silicon-containing treatment process.

### <Fluorine-containing resin>

In the disclosure, the fluorine-containing resin is not particularly limited, which, for example, is one or more of polytetrafluoroethylene (PTFE), perfluoro(alkoxy alkane) (PFA), perfluoroethylene-propylene copolymer (FEP), ethylene-tetrafluoroethylene copolymer (ETFE), and polyvinylidene fluoride (PVdF).

### <Surface roughness Rz>

The surface roughness Rz is measured in accordance with the JIS-B0601-1994 test method. The second surface 12 of the substrate layer 10 has a surface roughness of Rz ≤ 2.5 µm, preferably Rz ≤ 2.0 µm.

### <Surface roughness Ra>

The surface roughness Ra is measured in accordance with the JIS-B0601-1994 test method. The second surface 12 of the substrate layer 10 has a surface roughness of Ra ≤ 1.0 µm, preferably Ra ≤ 0.8 µm.

The surface roughness of the second surface 12 of the substrate 10 is particularly important for the service life of the adhesive tape. When the above surface roughness Rz is > 2.5 µm, the surface roughness greatly affects the surface abrasion performance, for example, affecting the friction coefficient, affecting the surface stress when the adhesive tape is subjected to friction, and thereby causing surface damage phenomenon of the fluorine-containing resin surface layer. Therefore, when Rz is > 2.5 µm, the surface layer is more likely to cause microcrystalline damage of the surface layer resin, further causing destruction of the entire surface layer resin, resulting in a low service life of the adhesive tape.

On the other hand, when Ra is > 1.0 µm, as also the mechanism discovered by the inventors as described above, since the surface roughness greatly affects the surface abrasion performance, for example, affecting the friction coefficient, affecting the surface stress when the adhesive tape is subjected to friction, and thereby causing surface damage phenomenon of the fluorine-containing resin surface layer. Therefore, when Ra is > 1.0 µm, the surface layer is more likely to cause microcrystalline damage of the surface layer resin, further causing destruction of the entire surface layer resin, resulting in a low service life of the adhesive tape.

Besides, for consideration of manufacturability and service life, the thinnest thickness of the fluorine-containing resin layer on both sides of the glass fiber fabric (the thickness from the outer surface of the substrate layer to the nearest glass fiber) is generally 10 to 30 µm. When the thinnest thickness is less than 10 µm, since the thickness of the fluorine-containing resin layer is too thin, it is very liable to expose the internal glass fibers after abrasion, resulting in irregular surface morphology of the adhesive tape, which causes the adhesive tape to lose effects such as release and chemical resistance. On the other hand, when the thinnest thickness is more than 30 µm, the thickness of the fluorine-containing resin layer is too thick, resulting in deterioration of workability (mainly resistance to counter force) of the adhesive tape during use, and an increase in use cost.

In particular, the thinnest thickness 15 between the second surface 12 of the substrate layer 10 and the glass fiber fabric 13 is especially important for the service life of the adhesive tape. In the disclosure, the thinnest thickness 15 is 10 to 30 µm, preferably 12 to 25 µm. When the above-mentioned thinnest thickness is less than 10 µm, it may cause adverse effects as described above. On the other hand, when the above-mentioned thinnest thickness is more than 30 µm, it may cause adverse effects as described above.

A ratio of the thinnest thickness 15 between the second surface 12 of the substrate layer 10 and the glass fiber fabric 13 to the thinnest thickness 14 between the first surface 11 of the substrate layer 10 and the glass fiber fabric 13 is preferably 0.8 to 1.3, more preferably 0.9 to 1.1. When the ratio is less than 0.8, the adhesive tape is prone to curling in one direction during processing, resulting in deterioration in the practical use performance of the adhesive tape. When the ratio is larger than 1.3, based on the same principle, the adhesive tape is prone to curling in one direction during processing, resulting in deterioration in the practical use performance of the adhesive tape.

### <Adhesive layer>

In the disclosure, the type of the adhesive used for the adhesive layer is not particularly limited, and acrylic, rubber, or silicone-based pressure-sensitive adhesive materials, which are conventionally used in an adhesive layer of an adhesive tape, may be used. From the viewpoint of heat resistance of the adhesive tape, a silicone-based adhesive is preferable.

The thickness of the adhesive layer is usually 5 to 100 µm, preferably 10 to 60 µm. When the thickness is less than 5 µm, the adhesive force is low, and peeling easily occurs during use. When the thickness is more than 100 µm, the thermal conductivity of the adhesive tape used for heat sealing in the thickness direction is lowered, which is not preferable.

### [Method for manufacturing a heat-resistant adhesive tape]

The method for manufacturing a heat-resistant adhesive tape of the disclosure comprises: treating a glass fiber fabric with a silicon-containing agent (a silicon-containing agent treating step); impregnating the glass fiber fabric treated as above with a fluorine-containing resin (an impregnating step); heating the glass fiber fabric impregnated with the fluorine-containing resin to form the substrate layer (a substrate layer forming step); forming the adhesive layer on the first surface of the substrate layer.

### <Silicon-containing agent treating step>

Silicon-containing agent treatment is a process of treating the glass fiber fabric with a silicon-containing agent. The silicon-containing agent is a class of organosilicon compounds containing two groups having different chemical properties in one molecule, and its structural formula may be represented by a general formula YSiX₃. In this formula, Y is a non-hydrolyzable group, including an alkenyl group (mainly a vinyl group), and a hydrocarbon group having a functional group such as Cl, NH₂, -SH, an epoxy group, N₃, a (meth)acryloyloxy group and an isocyanate group at the end, that is, a carbon functional group; X is a hydrolyzable group, such as Cl, OCH₃, OCH₂CH₃, OC₂H₄OCH₃, OSi(CH₃)₃. Due to the presence of the silicon-containing agent, the glass fiber fabric has a great influence on the flattening property of the fluorine-containing resin material on the surface of the glass fiber fabric and the internal immersion property of the fluorine-containing resin material. In the present application, the amount of the silicon-containing agent is 0.05 to 0.2% by weight based on the total weight of the glass fiber fabric.

### <Impregnating step>

In the impregnating step, the glass fiber fabric may be impregnated with a fluorine-containing resin emulsion.

The fluorine-containing resin emulsion is a polymer resin emulsion in which a polymer main chain is carbon element, and the element bonded to the carbon element is fluorine element. For example, polytetrafluoroethylene (PTFE) emulsion is formed by emulsion polymerization of tetrafluoroethylene (TFE). The content (solid content ratio) of the fluorine-containing resin in the fluorine-containing resin emulsion is preferably from 40 to 60% by weight.

In the impregnating step, the glass fiber fabric is impregnated into the fluorine-containing resin emulsion. The impregnation can be carried out, for example, by a method of impregnating the glass fiber fabric in the fluorine-containing resin emulsion, a method of coating the fluorine-containing resin emulsion on the glass fiber fabric, or a method of spraying the fluorine-containing resin emulsion on the glass fiber fabric.

After the aforesaid impregnating step, the glass fiber fabric impregnated with the fluorine-containing resin may be processed with a scraper or a squeegee to separately control the thickness of the fluorine-containing resin on both sides of the glass fiber fabric.

### <Heating step>

In the heating step, the dispersion medium is lost from the fluorine-containing resin emulsion impregnated into the glass fiber fabric in the impregnating step, and the fluorine-containing resin is fused to each other (the emulsion is converted into a fusion body), to form a glass fiber fabric impregnated with the fluorine-containing resin.

The specific method of the heating step is not limited, provided that the glass fiber fabric impregnated with the fluorine-containing resin emulsion can be heated to a temperature equal to or higher than the melting point of the fluorine-containing resin, generally 15°C to 60°C above the melting point of the fluorine-containing resin. For example, when a PTFE emulsion is used, the heating temperature is preferably 330°C to 400°C, and more preferably 340°C to 380°C.

The formed glass fiber fabric may be further repeatedly subject to the impregnating step and the heating step as needed. By this repetition, for example, the thickness of the glass fiber fabric impregnated with the fluorine-containing resin can be increased. The total thickness of the substrate layer formed by the above steps is, for example, 10 to 500 µm, preferably 40 to 300 µm, and more preferably 60 to 200 µm. In general, the impregnating step and the heating step are repeated 2 to 4 times. If too many times of repetitions are performed, the substrate layer may be too thick, so that when the adhesive tape is attached to a hot plate having an angle, the counter force is large after the bending, so it is not easy to stick and is easily detached from the adherend.

The method for manufacturing the substrate layer of the adhesive tape in the disclosure may comprise any steps in addition to the impregnating step and the heating step, as long as the effects of the disclosure can be obtained.

Thereby, the substrate layer of the adhesive tape in which the fluorine-containing resin is impregnated in the glass fiber fabric is obtained.

### <Surface treatment step>

The surface treatment step is a treatment for improving the adhesion (anchoring force) between the surface (namely the first surface in the disclosure) on which the adhesive layer is provided in the substrate layer of the adhesive tape and the adhesive layer provided on the surface. This step may be carried out as needed. The specific method of performing the surface treatment step is the same as the known method carried out in the manufacture of an adhesive tape. The surface treatment step may be carried out, for example, by applying a surface treatment solution (adhesive treatment solution) containing a surface treatment agent (adhesive treatment agent) and a dispersant to the surface on which an adhesive layer is to be provided in the substrate layer of the adhesive tape.

The surface treatment agent is, for example, a polyester resin, a melamine resin, an acrylic resin, a silicone resin, and a fluorine-containing resin such as PTFE, PFA or ETFE. The dispersant is, for example, toluene, xylene, ethyl acetate, butanol, water, and a mixture thereof.

The surface treatment solution may contain a surface treatment agent and a material other than a dispersant, such as a crosslinking agent, a curing agent, an organic filler, an inorganic filler, and a surfactant. The organic filler is, for example, a powder of a melamine resin, an epoxy resin, or an acrylic resin, and the inorganic filler is, for example, a powder of iron oxide, aluminum oxide, or silica.

In the disclosure, the surface treatment solution is preferably a solution containing a fluorine-containing resin PFA as a surface treatment agent, water as a dispersant, and silica particles as an inorganic filler.

### <Adhesive layer forming step>

In the adhesive layer forming step, an adhesive layer is provided on the first surface 11 of the substrate layer of the adhesive tape. The specific method of performing the adhesive layer forming step is the same as the known method carried out in the manufacture of an adhesive tape. The adhesive layer forming step, for example, may be carried out by coating an adhesive on the first surface of the substrate layer of the adhesive tape.

### Examples

In the examples,
(1) The surface roughness Rz and Ra both were measured according to the JIS-B0601-1994 test method.
(2) The abrasion resistance test was carried out by using a Taber abrasion machine, an abrading wheel CS-17, a load of 500 g, and grinding the adhesive tape for 1000 times, weighing the weight before and after the abrasion, and calculating the abrasion loss.
(3) The thinnest thickness between the surface of the substrate layer and the glass fiber fabric was measured by the following method: the adhesive tape product was subject to sectional cut with a cutter and was cut into a sample having a thinness of 20 µm, which was placed under an electron microscope magnified 100 times to observe the section and determine the thinnest thickness between the two surfaces of the substrate layer and the glass fiber fabric. Measurement was carried out at 5 points, and the average value was used.
(4) Whether or not the glass fiber is exposed in the heat-resistant adhesive tape was determined by using a Taber abrasion machine, an abrading wheel CS-17, a load of 500 g, and abrading the adhesive tape for 500 times, and using a microscope to observe the surface status of the adhesive tape in an area of 1 cm × 1 cm after abrasion.
   The status that there was no obvious abrasion and no glass fiber was exposed was evaluated as ⊚,
   The status that there was abrasion on the surface but no glass fiber was exposed was evaluated as ∘,
   The status that a part of glass fibers were exposed was evaluated as ×;
   The status that abrasion of glass fiber was observed was evaluated as ××.
(5) The evaluation of the curling property of the heat-resistant adhesive tape was carried out by taking an adhesive tape of 1 m × 15 mm, grasping one end thereof and floating the other end freely, and observing the curling condition of the adhesive tape.

The case where the adhesive tape was substantially not curled and substantially kept in a line shape was evaluated as ∘;
The case where the adhesive tape was merely slightly curled and could be used continuously after being straightened was evaluated as △;
The case where the adhesive tape was curled into a plurality of circles was evaluated as ×.

### Example 1

A glass fiber plain fabric having a thickness of 50 µm was treated with a silicon-containing agent, and the amount of the silicon-containing agent was 0.07% by weight based on the total weight of the glass fiber plain fabric. The glass fiber plain fabric treated with the silicon-containing agent was impregnated with a PTFE emulsion having a fluorine-containing resin content (solid content ratio) of 55% by weight. After the impregnation, the thickness of the PTFE on both sides of the glass fiber was controlled by a scraper. After dehydration, the resultant was sintered at a high temperature of 350°C for 20 seconds. The aforesaid impregnation and sintering were repeated once. The scraper was controlled to adjust the spacing between the glass fibers so that a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.2. Then, the adhesive surface (i.e., the first surface 11) was coated with an SiO₂/PFA mixture and then sintered to form a surface treated layer. The thickness of the adhesive layer was 40 µm. In the obtained adhesive tape, the adhesive-free surface (i.e., the second surface 12) had a surface roughness Ra of 0.8 µm and a Rz of 3.0 µm, and the thickness at the thinnest portion between the adhesive-free surface and the glass fiber plain fabric was 12 µm.

The abrasion loss of the obtained adhesive tape was measured, and the glass fiber exposure condition and curling condition of the adhesive tape were observed. The results are shown in Table 1.

### Example 2

The steps in Example 1 were repeated, except for the following differences: in the obtained adhesive tape, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 1.2 µm and a Rz of 1.8 µm, and the thickness at the thinnest portion between the adhesive-free surface and the glass fiber plain fabric was 14 µm.

The abrasion loss of the obtained adhesive tape was measured, and the glass fiber exposure condition and curling condition of the adhesive tape were observed. The results are shown in Table 1.

### Example 3

The steps in Example 1 were repeated, except for the following differences: in the obtained adhesive tape, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 0.5 µm and a Rz of 1.8 µm, and the thickness at the thinnest portion between the adhesive-free surface and the glass fiber plain fabric was 20 µm.

The abrasion loss of the obtained adhesive tape was measured, and the glass fiber exposure condition and curling condition of the adhesive tape were observed. The results are shown in Table 1.

### Example 4

The steps in Example 1 were repeated, except for the following differences: the amount of the silicon-containing agent was 0.12% by weight based on the total weight of the glass fiber plain fabric; in the obtained adhesive tape, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 0.3 µm and a Rz of 1.1 µm, and the thickness at the thinnest portion between the adhesive-free surface and the glass fiber plain fabric was 20 µm.

The abrasion loss of the obtained adhesive tape was measured, and the glass fiber exposure condition and curling condition of the adhesive tape were observed. The results are shown in Table 1.

### Example 5

The steps in Example 1 were repeated, except for the following differences: the amount of the silicon-containing agent was 0.12% by weight based on the total weight of the glass fiber plain fabric; in the obtained adhesive tape, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.5; the adhesive-free surface (i.e., the second surface 12) had a surface roughness Ra of 0.3 µm and a Rz of 1.1 µm, and the thickness at the thinnest portion between the adhesive-free surface and the glass fiber plain fabric was 20 µm.

The abrasion loss of the obtained adhesive tape was measured, and the glass fiber exposure condition and curling condition of the adhesive tape were observed. The results are shown in Table 1.

### Example 6

The steps in Example 1 were repeated, except for the following differences: the amount of the silicon-containing agent was 0.18% by weight based on the total weight of the glass fiber plain fabric; in the obtained adhesive tape, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 0.5 µm and a Rz of 1.3 µm, and the thickness at the thinnest portion between the adhesive-free surface and the glass fiber plain fabric was 14 µm.

The abrasion loss of the obtained adhesive tape was measured, and the glass fiber exposure condition and curling condition of the adhesive tape were observed. The results are shown in Table 1.

### Comparative example 1

The steps in Example 1 were repeated, except for the following differences: the amount of the silicon-containing agent was 0.5% by weight based on the total weight of the glass fiber plain fabric; in the obtained adhesive tape, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 1.2 µm and a Rz of 4.5 µm, and the thickness at the thinnest portion between the adhesive-free surface and the glass fiber plain fabric was 9 µm.

The abrasion loss of the obtained adhesive tape was measured, and the glass fiber exposure condition and curling condition of the adhesive tape were observed. The results are shown in Table 1.

### Comparative example 2

The steps in Example 1 were repeated, except for the following differences: the amount of the silicon-containing agent was 0.02% by weight based on the total weight of the glass fiber plain fabric; in the obtained adhesive tape, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 2.0; the adhesive-free surface (i.e., the second surface 12) had a surface roughness Ra of 1.2 µm and a Rz of 4.8 µm, and the thickness at the thinnest portion between the adhesive-free surface and the glass fiber plain fabric was 9 µm.

The abrasion loss of the obtained adhesive tape was measured, and the glass fiber exposure condition and curling condition of the adhesive tape were observed. The results are shown in Table 1.

### Comparative example 3

The steps in Example 1 were repeated, except for the following differences: the amount of the silicon-containing agent was 0.02% by weight based on the total weight of the glass fiber plain fabric; in the obtained adhesive tape, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 1.9 µm and a Rz of 6.2 µm, and the thickness at the thinnest portion between the adhesive-free surface and the glass fiber plain fabric was 5 µm.

The abrasion loss of the obtained adhesive tape was measured, and the glass fiber exposure condition and curling condition of the adhesive tape were observed. The results are shown in Table 1.

### Comparative example 4

The steps in Example 1 were repeated, except for the following differences: no silicon-containing agent was added; in the obtained adhesive tape, a ratio of the thickness at the thinnest portion between the adhesive-free surface (i.e., the second surface 12) and the glass fiber plain fabric to the thickness at the thinnest portion between the adhesive surface (i.e., the first surface 11) and the glass fiber plain fabric was 1.0; the adhesive-free surface (i.e., the second surface 12) had a surface roughness Ra of 1.5 µm and a Rz of 6.1 µm, and the thickness at the thinnest portion between the adhesive-free surface and the glass fiber plain fabric was 6 µm.

The abrasion loss of the obtained adhesive tape was measured, and the glass fiber exposure condition and curling condition of the adhesive tape were observed. The results are shown in Table 1.

**Table 1**

| | Fluori ne-con tainin g resin | Second surface Ra(µm) | Second surface Rz(µm) | The thinnest thickness between the second surface and the glass fiber fabric (µm) | Ratio of the thinne st thickn ess | Amount of the silicon-c ontainin g agent (% by weight) | Abrasi on loss (mg) | Exposure of glass fiber | Curling property |
|---|---|---|---|---|---|---|---|---|---|
| Example 1 | PTFE | 0.8 | 3.0 | 12 | 1.2 | 0.07 | 8 | ○ | ○ |
| Example 2 | PTFE | 1.2 | 1.8 | 14 | 1.0 | 0.07 | 6 | ○ | ○ |
| Example 3 | PTFE | 0.5 | 1.8 | 20 | 1.0 | 0.07 | 4.5 | ⊚ | ○ |
| Example 4 | PTFE | 0.3 | 1.1 | 20 | 1.0 | 0.12 | 3 | ⊚ | ○ |
| Example 5 | PTFE | 0.3 | 1.1 | 20 | 1.5 | 0.12 | 3 | ⊚ | △ |
| Example 6 | PTFE | 0.5 | 1.3 | 14 | 1.0 | 0.18 | 5.5 | ⊚ | ○ |
| | | | | | | | | | |
| Comparative example 1 | PTFE | 1.2 | 4.5 | 9 | 1.0 | 0.5 | 11 | × | ○ |
| Comparative example 2 | PTFE | 1.2 | 4.8 | 9 | 2.0 | 0.02 | 12 | × | × |
| Comparative example 3 | PTFE | 1.9 | 6.2 | 5 | 1.0 | 0.02 | 16 | ×× | ○ |
| Comparative example 4 | PTFE | 1.5 | 6.1 | 6 | 1.0 | 0 | 15 | ×× | ○ |

From the above examples and comparative examples, it was evident that in the disclosure, by making the surface roughness Rz ≤ 2.5 µm or Ra ≤ 1.0 µm of the second surface, the resultant adhesive tape of the disclosure could have excellent abrasion resistance and curling property, and no fiber was exposed in the adhesive tape. On the contrary, the adhesive tapes which did not satisfy the surface roughness condition of the second surface in the disclosure had poor abrasion resistance, and a part of the fibers in the adhesive tape were exposed or abraded.

## Claims

1. A heat-resistant adhesive tape comprising a substrate layer and an adhesive layer provided on a first surface of the substrate layer, the substrate layer further comprising a second surface opposite to the first surface, and the substrate layer being a glass fiber fabric treated with a silicon-containing agent, and the treated glass fiber fabric is impregnated with a fluorine-containing resin, wherein the second surface has a surface roughness, as measured in accordance with the JIS-B0601-1994 test method, of Rz ≤ 2.5 µm or Ra ≤ 1.0 µm, wherein the thinnest thickness between the second surface of the substrate layer and the glass fiber fabric in terms of the thickness from the outer surface of the substrate layer to the nearest glass fiber is 10 to 30 µm, and wherein the amount of the silicon-containing agent is 0.05 to 0.2% by weight of the total weight of the glass fiber fabric.

2. The heat-resistant adhesive tape according to claim 1, wherein a ratio of the thinnest thickness between the second surface of the substrate layer and the glass fiber fabric to the thinnest thickness between the first surface of the substrate layer and the glass fiber fabric is 0.8 to 1.3.

3. The heat-resistant adhesive tape according to claim 1 or 2, wherein the fluorine-containing resin is one or more of polytetrafluoroethylene (PTFE), perfluoro(alkoxy alkane) (PFA), perfluoroethylene-propylene copolymer (FEP), ethylene-tetrafluoroethylene copolymer (ETFE), and polyvinylidene fluoride (PVdF).

4. A method for manufacturing the heat-resistant adhesive tape according to any one of claims 1 to 3, comprising the following steps:
treating a glass fiber fabric with a silicon-containing agent;
impregnating the glass fiber fabric treated as above with a fluorine-containing resin;
heating the glass fiber fabric impregnated with the fluorine-containing resin to form the substrate layer;
forming the adhesive layer on the first surface of the substrate layer,
wherein the amount of the silicon-containing agent is 0.05 to 0.2% by weight of the total weight of the glass fiber fabric.

5. The method for manufacturing the heat-resistant adhesive tape according to claim 4, wherein after the glass fiber fabric is impregnated with the fluorine-containing resin and before the glass fiber fabric is heated to form the substrate layer, the glass fiber fabric impregnated with the fluorine-containing resin is processed with a scraper to control the thickness of the fluorine-containing resin on both sides of the glass fiber fabric.

6. The method for manufacturing the heat-resistant adhesive tape according to claim 4 or 5, wherein after the substrate layer is formed and before the adhesive layer is formed, the first surface of the substrate is subject to a surface treatment.

7. The method for manufacturing the heat-resistant adhesive tape according to claim 6, wherein the surface treatment is performed by using a SiO₂/PFA mixture, and the PFA is a perfluoro(alkoxy alkane).

8. The method for manufacturing the heat-resistant adhesive tape according to claim 4 or 5, wherein the step of impregnating the glass fiber fabric with the fluorine-containing resin and the step of heating to form the substrate layer are repeated for 2 to 4 times.

## Patentansprüche

1. Hitzebeständiges Klebeband, umfassend eine Substratschicht und eine Klebstoffschicht, die auf einer ersten Oberfläche der Substratschicht bereitgestellt ist, wobei die Substratschicht ferner eine zweite Oberfläche gegenüber der ersten Oberfläche umfasst und die Substratschicht ein Glasfasergewebe ist, das mit einem silikonhaltigen Mittel behandelt ist, und das behandelte Glasfasergewebe mit einem fluorhaltigen Harz imprägniert ist, wobei die zweite Oberfläche eine Oberflächenrauhigkeit, gemessen gemäß dem Testverfahren JIS-B0601-1994, von Rz ≤ 2,5 µm oder Ra ≤ 1,0 µm aufweist, wobei die dünnste Dicke zwischen der zweiten Oberfläche der Substratschicht und dem Glasfasergewebe in Bezug auf die Dicke von der äußeren Oberfläche der Substratschicht bis zur nächstgelegenen Glasfaser 10 bis 30 µm beträgt, und wobei die Menge des silikonhaltigen Mittels 0,05 bis 0,2 Gew.-% des Gesamtgewichts des Glasfasergewebes beträgt.

2. Hitzebeständiges Klebeband nach Anspruch 1, wobei das Verhältnis von der dünnsten Dicke zwischen der zweiten Oberfläche der Substratschicht und dem Glasfasergewebe zu der dünnsten Dicke zwischen der ersten Oberfläche der Substratschicht und dem Glasfasergewebe 0,8 bis 1,3 beträgt.

3. Hitzebeständiges Klebeband nach Anspruch 1 oder 2, wobei das fluorhaltige Harz eines oder mehrere aus Polytetrafluorethylen (PTFE), Perfluor(alkoxyalkan) (PFA), Perfluorethylen-Propylen-Copolymer (FEP), Ethylen-Tetrafluorethylen-Copolymer (ETFE) und Polyvinylidenfluorid (PVdF) ist.

4. Verfahren zur Herstellung des hitzebeständigen Klebebandes nach einem der Ansprüche 1 bis 3, umfassend die folgenden Schritte:
das Behandeln eines Glasfasergewebes mit einem silikonhaltigen Mittel;
das Imprägnieren des wie oben behandelten Glasfasergewebes mit einem fluorhaltigen Harz;
das Erhitzen des mit dem fluorhaltigen Harz imprägnierten Glasfasergewebes zur Bildung der Substratschicht;
das Ausbilden der Klebstoffschicht auf der ersten Oberfläche der Substratschicht,
wobei die Menge des silikonhaltigen Mittels 0,05 bis 0,2 Gew.-% des Gesamtgewichts des Glasfasergewebes beträgt.

5. Verfahren zur Herstellung des hitzebeständigen Klebebandes nach Anspruch 4, wobei nachdem das Glasfasergewebe mit dem fluorhaltigen Harz imprägniert wurde und bevor das Glasfasergewebe zur Bildung der Substratschicht erhitzt wird, das mit dem fluorhaltigen Harz imprägnierte Glasfasergewebe mit einem Schaber bearbeitet wird, um die Dicke des fluorhaltigen Harzes auf beiden Seiten des Glasfasergewebes zu kontrollieren.

6. Verfahren zur Herstellung des hitzebeständigen Klebebandes nach Anspruch 4 oder 5, wobei nachdem die Substratschicht gebildet ist und bevor die Klebeschicht gebildet wird, die erste Oberfläche des Substrats einer Oberflächenbehandlung unterzogen wird.

7. Verfahren zur Herstellung des hitzebeständigen Klebebandes nach Anspruch 6, wobei die Oberflächenbehandlung unter Verwendung eines SiOa/PFA-Gemisches durchgeführt wird und das PFA ein Perfluor(alkoxyalkan) ist.

8. Verfahren zur Herstellung des hitzebeständigen Klebebandes nach Anspruch 4 oder 5, wobei der Schritt des Imprägnierens des Glasfasergewebes mit dem fluorhaltigen Harz und der Schritt des Erhitzens zur Bildung der Substratschicht 2 bis 4 Mal wiederholt werden.

## Revendications

1. Ruban adhésif résistant à la chaleur comprenant une couche de substrat et une couche adhésive disposée sur une première surface de la couche de substrat, la couche de substrat comprenant en outre une seconde surface opposée à la première surface, et la couche de substrat étant un tissu en fibre de verre traité à l'aide d'un agent contenant du silicium, et le tissu en fibre de verre traité est imprégné avec une résine contenant du fluor, dans laquelle la seconde surface présente une rugosité de surface, telle que mesurée selon le procédé d'essai JIS-B0601-1994, égale à Rz ≤ 2,5 µm ou à Ra ≤ 1,0 µm, dans laquelle l'épaisseur la plus fine entre la seconde surface de la couche de substrat et le tissu en fibre de verre, en termes de l'épaisseur à partir de la surface externe de la couche de substrat jusqu'à la fibre de verre la plus proche, est comprise entre 10 et 30 µm, et dans laquelle la quantité d'agent contenant du silicium est comprise entre 0,05 et 0,2 % en poids par rapport au poids total du tissu en fibre de verre.

2. Le ruban adhésif résistant à la chaleur selon la revendication 1, dans laquelle un rapport de l'épaisseur la plus fine entre la seconde surface de la couche de substrat et le tissu en fibre de verre, à l'épaisseur la plus fine entre la première surface de la couche de substrat et le tissu en fibre de verre, est compris entre 0,8 et 1,3.

3. Le ruban adhésif résistant à la chaleur selon les revendications 1 ou 2, dans laquelle la résine contenant du fluor est au moins un composé choisi parmi le polytétrafluoroéthylène (PTFE), le perfluoro(alcoxy alcane) (PFA), un copolymère perfluoroéthylène-propylène (FEP), un copolymère éthylène-tétrafluoroéthylène (ETFE) et le fluorure de polyvinylidène (PVdF).

4. Procédé de fabrication du ruban adhésif résistant à la chaleur selon l'une quelconque des revendications 1 à 3, le procédé comprenant les étapes suivantes :
le traitement d'un tissu en fibre de verre à l'aide d'un agent contenant du silicium ;
l'imprégnation du tissu en fibre de verre, traité comme ci-dessus, avec une résine contenant du fluor ;
le chauffage du tissu en fibre de verre imprégné avec la résine contenant du fluor afin de former la couche de substrat ;
la formation de la couche adhésive sur la première surface de la couche de substrat,
la quantité d'agent contenant du silicium étant comprise entre 0,05 et 0,2 % en poids par rapport au poids total du tissu en fibre de verre.

5. Le procédé de fabrication du ruban adhésif résistant à la chaleur selon la revendication 4, dans lequel, après l'imprégnation du tissu en fibre de verre avec la résine contenant du fluor, et avant le chauffage du tissu en fibre de verre afin de former la couche de substrat, le tissu en fibre de verre imprégné avec la résine contenant du fluor est usiné à l'aide d'un racloir afin de réguler l'épaisseur de la résine contenant du fluor sur les deux côtés du tissu en fibre de verre.

6. Le procédé de fabrication du ruban adhésif résistant à la chaleur selon les revendications 4 ou 5, dans lequel, après la formation de la couche de substrat, et avant la formation de la couche adhésive, la première surface du substrat est soumise à un traitement de surface.

7. Le procédé de fabrication du ruban adhésif résistant à la chaleur selon la revendication 6, dans lequel le traitement de surface est effectué à l'aide d'un mélange SiO₂/PFA, et le PFA est un perfluoro(alcoxy alcane).

8. Le procédé de fabrication du ruban adhésif résistant à la chaleur selon les revendications 4 ou 5, dans lequel l'étape d'imprégnation du tissu en fibre de verre avec la résine contenant de fluor, et l'étape de chauffage destinée à former la couche de substrat, sont répétées 2 à 4 fois.
